# EUROPEAN PATENT SPECIFICATION

(11) **EP 0 620 547 B1**
(45) Date of publication and mention of the grant of the patent: **09.09.1998**
(21) Application number: 94102233.7
(22) Date of filing: 14.02.1994
(51) Int. Cl.: G11B 5/72, G11B 5/60

(54) **Magnetic recording reproducer**
"Magnetaufzeichnungs- und -wiedergabegerät"
"Appareil d enregistrement magnétique"

(30) Priority: 18.03.1993 JP 58367/93
(43) Date of publication of application: 19.10.1994
(73) Proprietor: Hitachi, Ltd., Chiyoda-ku, Tokyo 101-0062 (JP)
(72) Inventor: Nakakawaji, Takayuki, Hitachi-shi (JP); Shoji, Mitsuyoshi, Taga-gun, Ibaraki-ken (JP); Takamura, Tomoe, Hitachi-shi (JP); Imazeki, Shuji, Hitachi-shi (JP); Ito, Yutaka, Takahagi-shi (JP); Morooka, Hisashi, Hitachi-shi (JP); Murakami, Yuko, Naka-gun, Ibaraki-ken (JP); Arai, Juichi, Higashiibaraki-gun, Ibaraki-ken (JP)
(74) Representative: Beetz & Partner Patentanwälte

(56) References cited:
- EP-A- 0 367 510
- EP-A- 0 523 843
- DATABASE WPI Week 9002, Derwent Publications Ltd., London, GB; AN 90-010691 & JP-A-1 290 117 (HITACHI KK) 22 November 1989 & US-A-5 219 651 (MITSUYOSI SHOJI ET AL.) 15 June 1993

## Description

The present relates to a magnetic reproducing recorder which is excellent in sliding durability.

Magnetic media are most generally used as readable information storages and are widespread in the fields of not only large computers but also small personal computers, word processors, and the like. Therefore, the storage capacity of the magnetic media is increased year by year, and with this increase, remarkable technical innovations have been made. Particularly in hard-type magnetic disk units requiring high packing density and high-speed writing, among magnetic recorders, thin film magnetic recording media capable of having a high packing density have been used in recent years. With magnetic disks devices, there was the tendency to reduce the distance between the head and the disk for increasing the storage capacity, and now this distance is as short as about 0.1 µm. Therefore, the probability of contact sliding of the head on the disk is high not only during suspension of operation but also during operation of the disk. For this reason, inter alia, the sliding conditions become severe unavoidably, and hence, the sliding durability of the disk is absolutely necessary for improving the reliability of magnetic disk units.

Now, the lubricating layers of most magnetic recording media are formed of fluoro compounds, and many attempts have been made to improve the sliding durability. For example, methods comprising coating with or chemical fixing of fluorine-containing lubricants capable of being easily adsorbed have been proposed in US 4 120 995, and JP- 54-36171, JP-59-172159, JP-59-203239, JP-60-38730, JP-60-109028, JP-60-101717, JP-60-101715, JP-60-242518, JP-60-202533, JP-60-246020, JP-61-39919, JP-61-104318, JP-62-42316, JP-63-225918 and JP-63-220420. The fluorine-containing lubricants described in these documents are silane-based and phosphoric acid-based lubricants which react with the surface of an inorganic thin protective layer on the magnetic layer of a thin film magnetic recording medium to adhere to the surface. In addition, methods for improving the sliding durability by forming a lubricating film consisting of a plurality of components on the surface of a disk have been proposed in JP-62-257622, JP-62-257623, JP-2-175791, JP-2-240828, JP-2-249130, JP-3-34121 and JP-4-48435. Furthermore, methods comprising forming a lubricating film on a magnetic head slider in the contact portion with the surface of a disk have been proposed, for example, in JP- 62-188012, JP-62-231411, JP-62-34392, JP-63-48674, JP-63-117379, JP-63-269384 ,JP-63-276769, JP-1-137484 and JP-3-88189. These techniques are suitable for maintaining the head-disk spacing by the use of an air film, which is employed in present-day magnetic recorders.

However, there is the tendency to reduce the head-disk spacing more and more in the future, and it is considered that in the near future, the head-disk spacing will be of the order of nanometers or will become such that complete contact occurs. In such a distance range corresponding to keeping-off the head at a very short distance or contact sliding, a sufficient reliability on resistance to sliding cannot be realized by the above-mentioned conventional lubrication methods. Therefore, a lubricating layer formed on the outermost surface of a magnetic recording medium is required to have performance characteristics sufficient to withstand severe sliding conditions. In addition, magnetic recording media to be subjected to contact sliding, such as magnetic tapes, should also be improved in their sliding durability.

In these circumstances, methods in which a head is kept off using a thin liquid film have been proposed as techniques for lubrication in a spacing range corresponding to keeping-off at a very short distance or to a complete contact state, in US 2 969 435 and US 3 579 212, and JP-63-308775, JP-2-249177, JP-2-130789 and JP-3-119580. The above technique in which the head is kept off by inserting a liquid film permits a relatively stable keeping-off of the head even at a very short distance, because the liquid film has a higher rigidity than an air film. However, even when these techniques are employed for maintaining the reliability on sliding, contact sliding of the head on the disk promotes the wear of the disk unless the liquid film for keeping-off the head has a high sliding durability in itself. Therefore, for coping with the above-mentioned severe sliding problem, it is necessary to impart functions such as high wear resistance and low frictional properties to the liquid film. However, there are no effective means available therefor.

When recording and reading out are carried out while the head is kept off at a very short distance or is in complete contact with the disk, the head and the disk are brought into a severe sliding state because the contact sliding time is increased as compared with conventional sliding. Under such severe sliding conditions, the separation of a lubricating film results in an accelerated increase of the wear of the disk. Even when the lubricating film is tightly fixed to the surface of a protective film by chemical bonding or the like, the separation by sliding is not avoidable, so that the wear occurs intermittently. That is, even when the conventional method comprising forming a thin lubricating film of a fluoro compound on the surface of a disk which has been proposed for example in the above document US 4 120 995, is applied to keeping-off the head at a very short distance or complete contact sliding, the separation of the lubricating film by sliding is not avoidable, so that the wear proceeds intermittently.

For preventing the wear of a disk during keeping-off at a very short distance or complete contact sliding, friction and wear should be kept slight by preventing always solid-solid contact between the sliding surface of a magnetic head slider and the surfaces of a protective film and a magnetic film. That is, recording and reading out can be maintained while keeping the friction between the head and the disk slight without wear, when a lubricant having low frictional properties and an excellent wear resistance is used in the form of a lubricating film, and the lubricating film is such that when a part of the lubricating film is removed by sliding, the lubricating film is repaired at once in the sliding portion.

The keeping-off methods using a thin liquid film which have been proposed in US 2 969 435 and US 3 579 212 and JP-63-308775, JP-2-249177,JP-2-130789 and JP-3-119580, are considered as effective methods for repairing the removed portion of a lubricating layer (a liquid film) because the liquid film always coats the sliding surface by continuous supply of liquid. However, when sliding is caused by solid-solid contact, the repair of the lubricating layer (the liquid film) by the supply of the liquid cannot prevent the occurrence and progress of wear unless the liquid used has a low viscosity for realizing keeping-off at a very short distance, and the liquid supplied itself has satisfactory lubrication characteristics.

That is, as lubrication methods for keeping-off the head at a very short distance or complete contact sliding, the keeping-off methods using a liquid film, not to mention conventional methods comprising forming a thin lubricating film of a fluoro compound, are not sufficient.

EP-0 367 510 A2 discloses a magnetic reproducing recorder comprising a magnetic head, a magnetic recording medium comprising a non-magnetic substrate, a magnetic layer and a protective layer which are formed on the non-magnetic substrate in that order, and means for continuously supplying a low viscosity lubrication liquid to the surface of the protective layer forming a lubricating film thereon.

It is said in this document that "the liquid lubricant may be similar in formulation to the permanently applied lubricants employed in conventional systems" (column 2, lines 47-49).

Further it is stated that "a simple, straight chain hydrocarbon with the desired low viscosity and a simple molecule that will not degrade is recommended." (column 4, lines 47-49). The only concrete example of such a liquid lubricant given in this document is hexadecane.

It is the underlying problem of the present invention to provide a magnetic reproducing recorder of the above-indicated kind wherein a lubrication liquid is used which is capable of repairing the lubrication film and which has a high sliding durability of the lubricating film itself, which is a problem in keeping-off the head at a very short distance or with complete contact sliding. In detail, the problem to be solved by the present invention is to provide a magnetic reproducing recorder which overcomes the problems in the prior art by continuous supply of a lubrication liquid having a low viscosity, an excellent wear resistance and low frictional characteristics to sliding portions.

The above problems are solved teaching of claim 1. The dependent claims relate to prefered embodiments.

The magnetic reproducing recorder of the present invention comprises
- a magnetic head,
- a magnetic recording medium comprising a non-magnetic substrate, a magnetic layer and a protective layer which are formed on the non-magnetic substrate in that order,
   and
- means for continuously supplying a low viscosity lubrication liquid to the surface of the protective layer forming a lubricating film thereon;
it is **characterized in that**
the lubrication liquid comprises
- a lubricant selected from
   (A) fluoro compounds comprising a fluorine-containing portion and a fluorine-free portion,
      the fluorine-containing portion including a perfluoropolyoxyalkyl group or a perfluoropolyoxyalkylene group,
      or
   (B) oiliness agents selected from fatty acids of the formula

      CₙH₂ₙ₊₁COOH

      and
      dibasic acid diesters of the formula

      (CH₂)ₙ(COOCₘH₂ₘ₊₁)₂,

      wherein n and m are independent integers of 1 to 30,
      or
   (C) extreme pressure agents selected from phosphorus compounds of the formulae 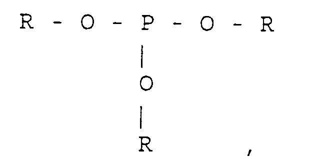 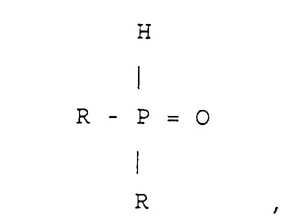 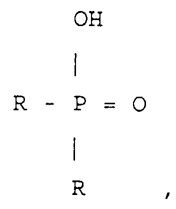 and 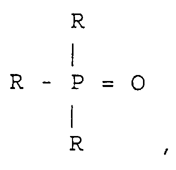 wherein R is a hydrocarbon group,
      or
   (D) mixtures of (A) + (B)
      or
   (E) mixtures of (A) + (C),
   and
- a perfluorocarbon type solvent having a viscosity of 0.01 to 10 cSt (10⁻² to 10 mm².s⁻¹) and being capable of dissolving the lubricant.

In the following, the invention will be explained with reference to the drawings.

Fig. 1 shows a cross section of a friction tester capable of supplying a liquid lubricant continuously to the surface of a magnetic disk.

Fig. 2 shows the results of a friction test friction for each concentration of the fluoro compound added in Example 2 to a fluorine-containing solvent.

Fig. 3 shows the results of a friction test for each concentration of the phosphorus-containing extreme pressure agent added in Example 3 to a fluorine-containing solvent.

Fig. 4 shows the results of a friction test for each concentration of the phosphorus-containing extreme pressure agent added in Example 4 to a fluorine-containing solvent to which a fluoro compound was also added to adjust its concentration to 0.05 wt%.

Fig. 5 shows the results of a friction test for each concentration of the phosphorus-containing extreme pressure agent added in Example 5 to a fluorine-containing solvent to which a fluoro compound was also added to adjust its concentration to 0.05 wt%.

Fig. 6 shows the results of a friction test for each concentration of the phosphorus-containing extreme pressure agent added in Example 6 to a fluorine-containing solvent to which a fluoro compound was also added to adjust its concentration to 0.01 wt%.

Fig. 7 shows the results of a friction test for each concentration of the oiliness agent added in Example 7 to a fluorine-containing solvent to which a fluoro compound was also added to adjust its concentration to 0.01 wt%.

Fig. 8 shows the results of a friction test for each concentration of the oiliness agent added in Example 8 to a fluorine-containing solvent to which a fluoro compound was also added to adjust its concentration to 0.05 wt%.

Fig. 9 shows the results of a friction test for each concentration of the nonpolar fluorocarbon oil added in Comparative Example 2 to a fluorine-containing solvent.

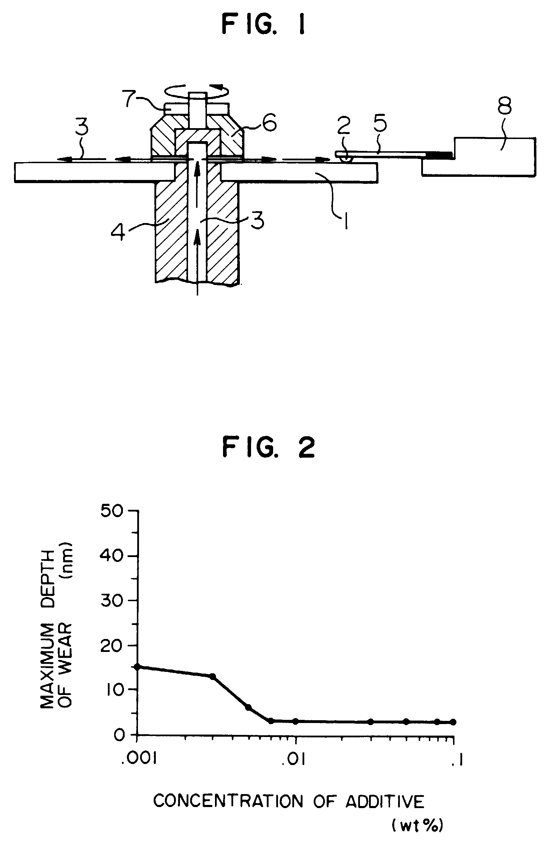

Explanation of the symbols used in Fig. 1 :
1 --- magnetic disk, 2 --- spherical slide, 3 --- continuously supplied liquid lubricant, 4 --- spindle, 5 --- gimbal, 6 --- magnetic-disk presser foot, 7 --- fixing screw, 8 --- spherical-slide holder.

In accordance with the present invention, the lubrication liquid is capable of imparting low frictional properties and low wearing-out properties; it is fixed to the surface of the protective layer through adsorption on or reaction with the surface of the protective film.

When the present invention is applied to a magnetic recorder in which recording and reading out are carried out at a very slightly kept-off or completely contacted state of the head, the liquid continuously supplied to the surface of the disk forms a thin liquid film on the disk surface. When the head and the disk are subjected to contact sliding, the fluoro compound dissolved in the liquid film exhibits low frictional properties and corrosion resistance because of its characteristic, i.e., a low surface energy, and either an extreme pressure agent or an oiliness agent which is similarly dissolved in the liquid film reacts with the sliding surface to form a boundary lubrication oil film and prevent the progress of wear, when slight wear is caused. Furthermore, in the present invention, the liquid containing the fluoro compound and/or either the extreme pressure agent or the oiliness agent is continuously supplied to the disk surface, so that even if the boundary lubrication oil film or the fluoro compound adsorbed on the surface is removed by sliding, a repairing effect on the sliding portion is brought about at once, whereby the head and the disk can carry out recording and reading out in a constant sliding state without wear.

In the present invention, the fluoro-containing portion of the fluoro compound (A) preferably includes a group selected from

F(CF(CF₃)CF₂-O-)x-C₂F₄-,

F(C₃F₆-O-)x-(CF₂O)y-(CF₂)z-

and

-(CF₂O)x-(C₂F₄O)y-(C₃F₆O)₃-CF₂-,

wherein x, y and z are independent integers of 2 to 50.

According to further prefered embodiments, the fluoro compound (A) is selected from the following compounds :

Rf-COOH

Rf-CONH-C₃H₆-Si(OC₂H₅)₃

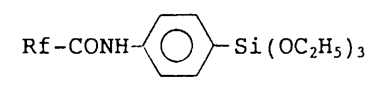

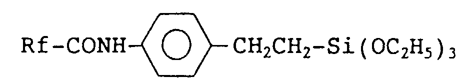

Rf-COOC₂H₄-Si(OCH₃)₃

(C₂H₅O)₃Si-C₃H₆-HNOC-Rf-CONH-C₃H₆-Si(OC₂H₅)₃

(C₂H₅O)₃Si-O-CH₂-Rf-CH₂-O-Si(OC₂H₅)₃

(CH₃O)₃Si-OOC-Rf-COO-Si(OCH₃)₃

(CH₃O)₃-Si-C₃H₆-NHCO-Rf-CONH-C₃H₆-Si-(OCH₃)₃

(C₂H₅O)₃-Si-C₃H₆-NHCO-Rf-CONH-C₃H₆-Si-(OC₂H₅)₂

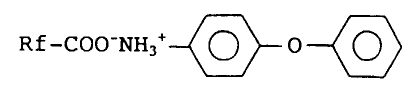

Rf-COO⁻NH₄⁺

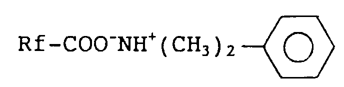

and 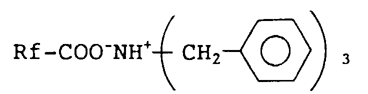 wherein Rf is a perfluoropolyoxyalkyl group or a perfluoropolyoxyalkylene group.

In addition, as the extreme pressure agents (C) in the present invention, phosphorus-containing extreme pressure agents are used from the viewpoint of corrosion of the magnetic recording medium and compatibility with the solvent capable of dissolving the fluoro compound. Specific examples of the extreme pressure agents (C) are

(C₆H₅O)₃P

(CH₃C₆H₄O)₃P

(n-C₉H₁₉C₆H₄O)₃P

(C₆H₅O)₂(C₉H₁₉C₆H₄O)P

(n-C₄H₉0)₃P

(n-C₁₂H₂₅O)₃P

(C₆H₅O)₂P(O)H

(C₆H₅O)₃P(O)

(CH₃C₆H₄O)₃P(O)

(n-C₈H₁₇O)₃P(O)

The oiliness agents (B) used according to the present invention include, for example,

CH₃(CH₂)₆COOH

CH₃(CH₂)₈COOH

CH₃(CH₂)₁₀COOH

CH₃(CH₂)₁₄COOH

CH₃(CH₂)₁₆COOH

and

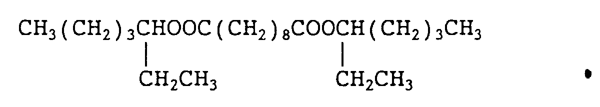

Because of the continuous supply of the lubrication liquid to the surface of a disk, a boundary lubrication oil film is formed not only on the recording medium but also on the sliding surface of a slider which permits to realize an excellent wear resistance and low frictional characteristics by virtue of the synergistic effect of the formation of the boundary lubrication oil film and the low frictional properties and wearing-out properties due to the low surface energy of the fluoro compound. By virtue of this effect, there can be provided magnetic recorders in which keeping-off of the head at a very short distance or complete contact sliding is conducted.

The effects of the present invention are described below in detail with reference to examples, but the present invention is not limited thereby.

### Example 1

A fluoro compound (I) of the following structural formula was prepared:

F(CF₂CF₂CF₂-O)₂₂C₂F₄-COOH (I).

Then, there was provided a magnetic disk base plate 1 composed an Al alloy disk of 133.35 mm (5.25 inches), a Ni-P layer formed on the surface of the Al alloy disk, a Cr layer formed on the Ni-P layer, a magnetic layer formed by sputtering Ni-Co on the Cr layer to a thickness of 50 nm, and a sputtered carbon layer of about 40 nm formed on the magnetic layer.

In addition, there was provided a spherical slide 2 made of TiC-Al₂O₃ ceramic which had a spherical surface of R30.

The thus obtained base plate 1 and the spherical slide 2 were mounted in the sliding tester as shown in Fig. 1. The tester shown in Fig. 1 has a structure which enables to introduce the liquid into the spindle 4, to be supplied continuously to the surface of the base plate of the disk 1 by centrifugal force due to the rotation of the spindle 4. As to the test conditions, the depth of wear of the disk by operation at a sliding rate of 10 m/s and a pressing load of the spherical slide 2 of 10 g for 3 hours was measured. The test results are shown in Table 1.

**Table 1**

| | Lubricant tested | Maximum depth of wear (nm) |
|---|---|---|
| Example 1 | Fluoro compound (I) F(CF₂CF₂CF₂-O)₂₂C₂F₄-COOH | 3.07 |
| Comparative Example 1 | Fluorine-containing lubricant trichlorotrifluoroethane | 63.7 |

The results indicate that in the present example in which fluoro compound (I) was used, the depth of wear was smaller than in the hereinafter described case where a liquid composed of a perfluorocarbon type solvent (FC 72, trade name, Sumitomo 3M Ltd.) alone was used (Comparative Example 1).

### Example 2

Solutions (a) were prepared by dissolving the same fluoro compound (I) used in Example 1 in a perfluorocarbon type solvent (FC 75, trade name, Sumitomo 3M Ltd.) to various concentrations by weight of 0.001 to 0.1 wt%.

Then, there was provided a magnetic disk base plate 1 composed of an Al alloy disk of 88.9 mm (3.5 inches), a Ni-P layer formed on the surface of the Al alloy disk, a Cr layer formed on the Ni-P layer, a magnetic layer formed by sputtering Co-Cr-Ta on the Cr layer to a thickness of 50 nm, and a sputtered carbon layer of about 30 nm formed on the magnetic layer.

In addition, there was provided a spherical slide 2 made of TiC-Al₂O₃ ceramic which had a spherical surface of R30.

The thus obtained base plate 1 and the spherical slide 2 were mounted in the same sliding tester as described in Example 1, and the depth of wear of the disk was measured at the various concentrations of the fluoro compound added under the same test conditions as described in Example 1. The test results are shown in Fig. 2. These results indicate that in the present example in which fluoro compound (I) was added, the depth of wear was smaller than in the hereinafter described cases, i.e., the case where a fluorine-containing solvent containing no fluoro compound was used alone (Comparative Example 1), and the case where a nonpolar fluorocarbon oil was added (Comparative Example 2). In addition, when the concentration of the fluoro compound added was 0.001 wt% to 0.007 wt%, the depth of wear was decreased with an increase of the concentration. When the concentration was 0.007 wt% or more, the depth of wear was not markedly changed.

### Example 3

Solutions (b) were prepared by dissolving a phosphorus-containing extreme pressure agent (II) of the following structural formula in a perfluorocarbon type solvent (FC 72, trade name, Sumitomo 3M Ltd.) to various concentrations by weight of 0.001 to 0.1 wt%.

Phosphorus-containing extreme pressure agent (II):

(C₆H₅O)₃P (II).

Then, a magnetic disk base plate 1 was provided by forming a Ni-P layer, a Cr layer, a Co-Cr-Pt magnetic layer of 50 nm and a sputtered carbon layer of about 35 nm in that order on the surface of an Al alloy disk of 63.5 mm (2.5 inches).

In addition, there was provided a spherical slide 2 made of TiC-Al₂O₃ ceramic which had a spherical surface of R30.

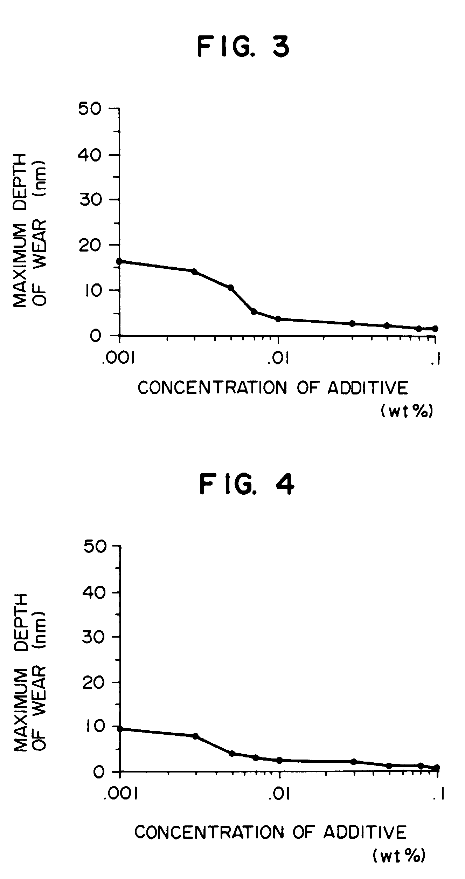

Using the thus obtained base plate 1 and the spherical slide 2, the same sliding test as described in Example 1 was carried out. The results of measuring the depth of wear of the disk at the various concentrations of the phosphorus-containing extreme pressure agent (II) added are shown in Fig. 3. These results indicate that hereinafter, in the present example in which the phosphorus-containing extreme pressure agent (II) was added, the depth of wear was smaller than in the case where a perfluorocarbon type solvent (FC 72, trade name, Sumitomo 3M Ltd.) was used alone (Comparative Example 1).

### Example 4

Solutions (c) were prepared by dissolving a fluoro compound (III) and a phosphorus-containing extreme pressure agent (IV) which are represented by the structural formulae shown below, in a perfluorocarbon type solvent (FC 77, trade name, Sumitomo.3M Ltd.) to a concentration by weight of 0.05 wt% and various concentrations by weight of 0.001 to 0.1 wt%, respectively.

Fluoro compound (III):

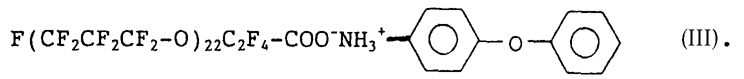

Phosphorus-containing extreme pressure agent (IV):

(CH₃C₆H₄O)₃P (IV).

Then, a magnetic disk base plate 1 was provided by forming a Ni-P layer, a Cr layer, a Co-Cr-Pt magnetic layer of 40 nm and a sputtered carbon layer of 20 nm in that order on the surface of a glass disk of 63.5 mm (2.5 inches).

In addition, there was provided a spherical slide 2 made of TiC-Al₂O₃ ceramic which had a spherical surface of R30.

Using the thus obtained base plate 1 and the spherical slide 2, the depth of wear of the disk was measured at the various concentrations of the phosphorus-containing extreme pressure agent (IV) added with the same tester under the same test conditions as described in Example 1. The results are shown in Fig. 4. Hereinafter, the reducing effect of the addition of the phosphorus-containing extreme pressure agent on the depth of wear was confirmed by comparison with the case where a solution prepared by adding a nonpolar fluorocarbon oil to a perfluorocarbon type solvent (FC 72, trade name) was used (Comparative Example 2).

### Example 5

Solutions (d) were prepared by dissolving a fluoro compound (V) and a phosphorus-containing extreme pressure agent (VI) which are represented by the structural formulae shown below, in a perfluorocarbon type solvent (FC 77, trade name, Sumitomo 3M Ltd.) to a concentration by weight of 0.05 wt% and various concentrations by weight of 0.001 to 0.1 wt%, respectively.

Fluoro compound (V):

F(CF₂CF₂CF₂-O)₂₂C₂F₄-COO⁻NH₄⁺ (V).

Phosphorus-containing extreme pressure agent (VI):

(C₁₀H₂₁O)₂PHO (VI).

Then, a magnetic disk base plate 1 was provided by forming a Ni-P layer, a Cr layer, a Co-Cr-Ta magnetic layer of 50 nm and a sputtered carbon layer of 20 nm in that order on the surface of an Al alloy disk of 45.72 mm (1.8 inches).

In addition, there was provided a spherical slide 2 made of TiC-Al₂O₃ ceramic which had a spherical surface of R30.

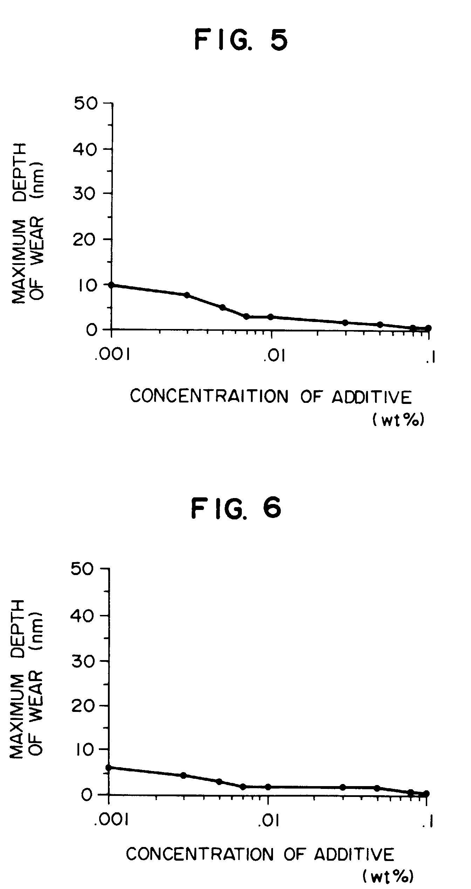

Using the thus obtained base plate 1 and the spherical slide 2, the depth of wear of the disk was measured at the various concentrations of the phosphorus-containing extreme pressure agent (IV) added with the same tester under the same test conditions as described in Example 1. The results are shown in Fig. 5. As in Example 4, the reducing effect of the addition of the phosphorus-containing extreme pressure agent on the depth of wear was confirmed by comparison with Comparative Example 2.

### Example 6

Solutions (e) were prepared by dissolving a fluoro compound (VII) and a phosphorus-containing extreme pressure agent (VIII) which are represented by the structural formulae shown below, in a perfluorocarbon type solvent (FC 75, trade name, Sumitomo 3M Ltd.) to a concentration by weight of 0.01 wt% and various concentrations by weight of 0.001 to 0.1 wt%, respectively.

Fluoro compound (VII):

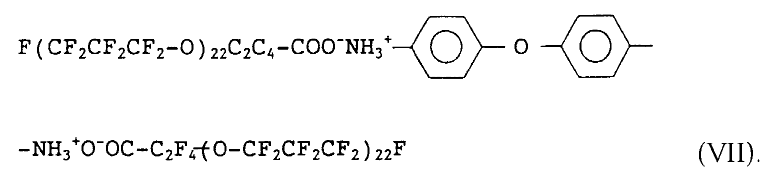

Phosphorus-containing extreme pressure agent (VIII):

(C₁₂H₂₅O)₂PHO (VIII).

Then, a magnetic disk base plate 1 was provided by forming a Ni-P layer, a Cr layer, a Co-Cr-Pt magnetic layer of 40 nm and a sputtered carbon layer of 30 nm in that order on the surface of a glass disk of 45.72 mm (1.8 inches).

In addition, there was provided a spherical slide 2 made of TiC-Al₂O₃ ceramic which had a spherical surface of R30.

Using the thus obtained base plate 1 and the spherical slide 2, the depth of wear of the disk was measured at the various concentrations of the phosphorus-containing extreme pressure agent (VIII) added with the same tester under the same test conditions as described in Example 1. The results are shown in Fig. 6. As in Example 4, the reducing effect of the addition of the phosphorus-containing extreme pressure agent on the depth of wear was confirmed.

### Example 7

Solutions (f) were prepared by dissolving a fluoro compound (IX) and an oiliness agent (X) which are represented by the structural formulae shown below, in a perfluorocarbon type solvent (FC 75, trade name, Sumitomo 3M Ltd.) to a concentration by weight of 0.01 wt% and various concentrations by weight of 0.001 to 0.1 wt%, respectively.

Fluoro compound (IX):

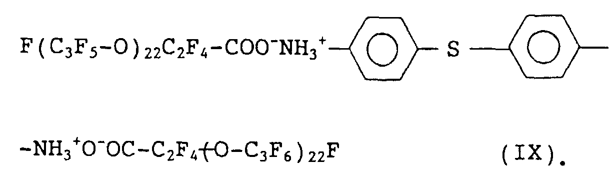

Oiliness agent (X):

CH₃(CH₂)₁₀COOH (X).

Then, a magnetic disk base plate 1 was provided by forming a Ni-P layer, a Cr layer, a Co-Cr-Pt magnetic layer of 40 nm and a sputtered carbon layer of 30 nm in that order on the surface of a glass disk of 33.02 mm (1.3 inches).

In addition, there was provided a spherical slide 2 made of TiC-Al₂O₃ ceramic which had a spherical surface of R30.

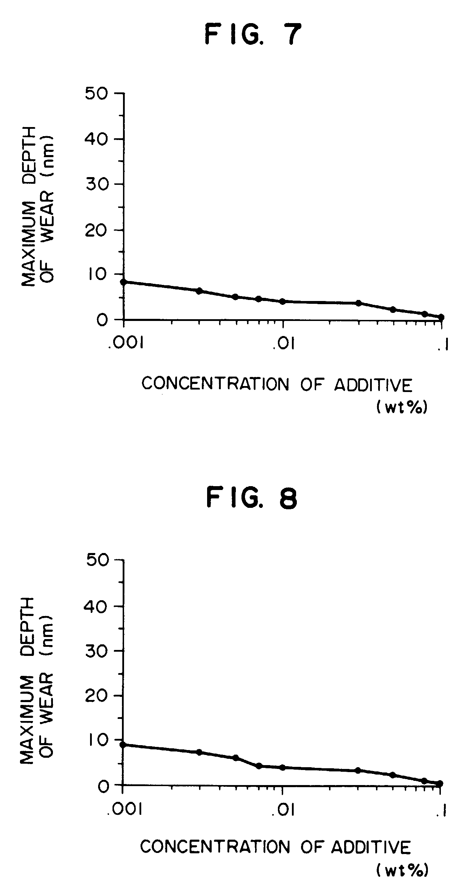

Using the thus obtained base plate 1 and the spherical slide 2, the depth of wear of the disk was measured at the various concentrations of the oiliness agent (X) added with the same tester under the same test conditions as described in Example 1. The results are shown in Fig. 7. It was confirmed that in the present example in which the oiliness agent was added, the depth of wear is smaller than in Comparative Example 2.

### Example 8

Solutions (g) were prepared by dissolving a fluoro compound (XI) and an oiliness agent (XII) which are represented by the structural formulae shown below, in a perfluorocarbon type solvent (FC 75, trade name, Sumitomo 3M Ltd.) to a concentration by weight of 0.05 wt% and various concentrations by weight of 0.001 to 0.1 wt%, respectively.

Fluoro compound (XI):

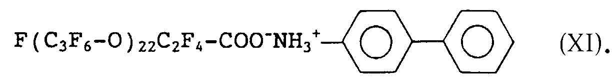

Oiliness agent (XII):

CH₃(CH₂)₁₄COOH (XII).

Then, a magnetic disk base plate 1 was provided by forming a Ni-P layer, a Cr layer, a Co-Cr-Pt magnetic layer of 40 nm and a sputtered carbon layer of 30 nm in that order on the surface of an Al alloy disc of 33.02 mm (1.3 inches).

In addition, there was obtained a spherical slide 2 made of TiC-Al₂O₃ ceramic which had a spherical surface of R30.

Using the thus obtained base plate 1 and the spherical slide 2, the depth of wear of the disk was measured at the various concentrations of the oiliness agent (XII) added with the same tester under the same test conditions as described in Example 1. The results are shown in Fig. 8. The same effect as described in Example 7 was confirmed.

### Comparative Example 1

Using the sliding tester (Fig. 1) used in Examples 1 to 8, the depth of wear in the case of using a perfluorocarbon type solvent (FC 75, trade name, Mitsui Fluoro Chemical Ltd.) alone was measured. The result is shown in Table 1.

### Comparative Example 2

Solutions (h) were prepared by dissolving a nonpolar fluorocarbon oil (XIII) of the following structural formula in a perfluorocarbon type solvent (FC 72, trade name, Sumitomo 3M Ltd.) to various concentrations by weight of 0.001 to 0.1 wt%.

Fluoro compound (XIII):

F(CF₂CF₂CF₂-O)₂₂CF₂CF₃ (XIII).

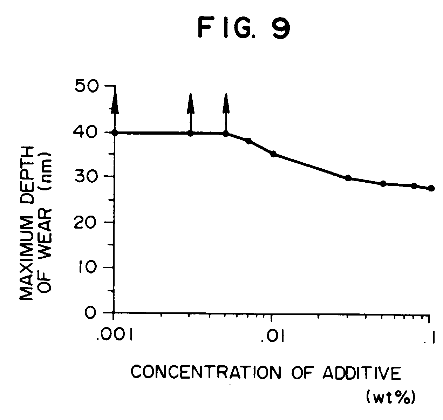

Then, the depth of wear of a disk was measured at the various concentrations of the nonpolar fluorocarbon oil (XIII) added with the same tester under the same test conditions as described in Examples 1 to 8. The results are shown in Fig. 9.

The results of Comparative Example 1 indicate that in the case of a lubricating film composed of the fluorine-containing solvent alone, the depth of wear was clearly larger than in the cases of addition of a fluoro compound and/or an extreme pressure agent or an oiliness agent, resulting in crush of the disk. From the results of Comparative Example 2, it was found that in Comparative Example 2 in which the nonpolar fluorocarbon oil incapable of being adsorbed on the surface was used, the depth of wear was larger than in the present example in which the fluoro compound capable of being easily adsorbed on the surface was used. That is, this fact means that no reliability on sliding can be assured unless a fluoro compound which has a fluorine-free portion for easy adsorption on the surface and is highly effective in coating sliding portions sufficiently, is chosen as fluoro compound to be added to a solution to be continuously supplied. In addition, it can be said that when added in the form of a solution, a mixture of a fluoro compound and an extreme pressure agent or an oiliness agent is more effective in imparting wear resistance than any of a fluoro compound, an extreme pressure agent and an oiliness agent.

The above results have proved that the present invention is very effective regarding the provision of lubricating layers for magnetic recording media which are subjected to severe sliding at a very slightly kept-off or completely contacted state.

By continuous supply of a liquid lubricant prepared by adding a fluoro compound and an extreme pressure agent or an oiliness agent to the solvent to the surface of a disk, the present invention leads to negligible friction and high wear resistance in severe sliding at a very slightly kept-off or completely contacted state, and the present invention provides magnetic reproducing recorders having excellent sliding-resistant characteristics.

## Claims

1. Magnetic reproducing recorder comprising
- a magnetic head (2),
- a magnetic recording medium (1) comprising a non-magnetic substrate, a magnetic layer and a protective layer which are formed on the non-magnetic substrate in that order,
and
- means for continuously supplying a low viscosity lubrication liquid to the surface of the protective layer forming a lubricating film (3) thereon,
**characterized in that**
the lubrication liquid comprises
- a lubricant selected from
(A) fluoro compounds comprising a fluorine-containing portion and a fluorine-free portion,
the fluorine-containing portion including a perfluoropolyoxyalkyl group or a perfluoro-polyoxyalkylene group,
or
(B) oiliness agents selected from fatty acids of the formula
CₙH₂ₙ₊₁COOH
and
dibasic acid diesters of the formula
(CH₂)ₙ(COOCₘH₂ₘ₊₁)₂,
wherein n and m are independent integers of 1 to 30,
or
(C) extreme pressure agents selected from phosphorus compounds of the formulae 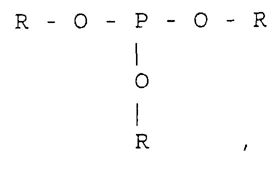 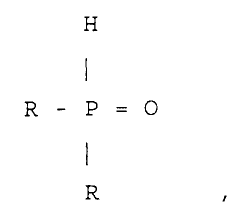 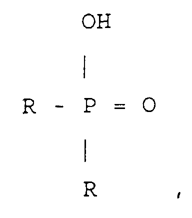 and 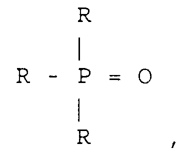 wherein R is a hydrocarbon group,
or
(D) mixtures of (A) + (B)
or
(E) mixtures of (A) + (C),
and
- a perfluorocarbon type solvent having a viscosity of 0.01 to 10 cSt (10⁻² to 10 mm²·s⁻¹) and being capable of dissolving the lubricant.

2. Magnetic reproducing recorder according to claim 1, wherein the fluorine-containing portion of the fluoro compound (A) includes a group selected from
F(CF(CF₃)CF₂-O-)x-C₂ F₄- ,
F(C₃F₆-O-)x-(CF₂O)y-(CF₂)z- ,
and
-(CF₂O)x-(C₂F₄O)y-(C₃F₆O)₃-CF₂-
x, y and z being independent integers of 2 to 50.

3. Magnetic reproducing recorder according to claim 1 or 2, wherein the fluoro compound (A) is selected from the following compounds:
Rf-COOH,
Rf-CONH-C₃H₆-Si(OC₂H₅)₃, 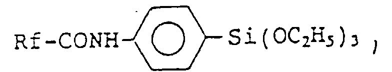 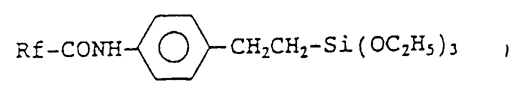
Rf-COOC₂H₄-Si(OCH₃)₃,
(C₂H₅O)₃Si-C₃H₆-HNOC-Rf-CONH-C₃H₆-Si(OC₂H₅)₃,
(C₂H₅O)₃Si-O-CH₂-Rf-CH₂-O-Si(OC₂H₅)₃,
(CH₃O)₃Si-OOC-Rf-COO-Si(OCH₃)₃,
(CH₃O)₃-Si-C₃H₆-NHCO-Rf-CONH-C₃H₆-Si-(OCH₃)₃,
(C₂H₅O)₃-Si-C₃H₆-NHCO-Rf-CONH-C₃H₆-Si-(OC₂H₅)₂,
Rf-COO⁻NH₄⁺, 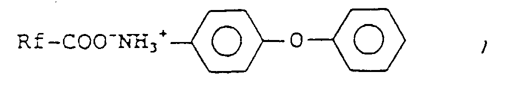 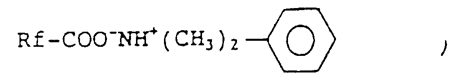
and 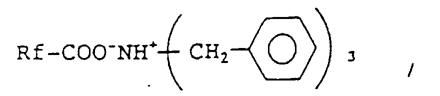 wherein Rf is a perfluoropolyoxyalkyl group or a perfluorooxyalkylene group.

4. Magnetic reproducing recorder according to any of claims 1 to 3, wherein the fluoro compound (A) is selected from the following compounds:
F(CF₂CF₂CF₂-O)₂₂C₂F₄-COO⁻NH₄⁺,
F(CF₂CF₂CF₂-O)₂₂C₂F₄-COOH, 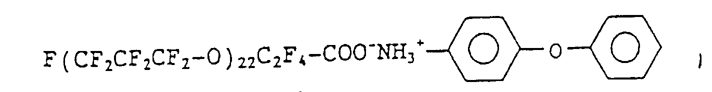 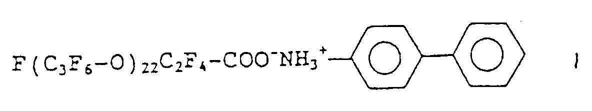 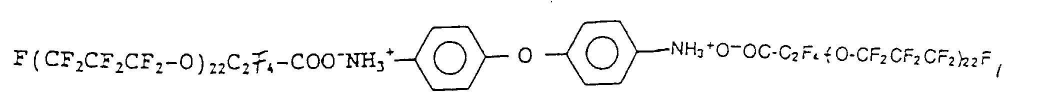
and

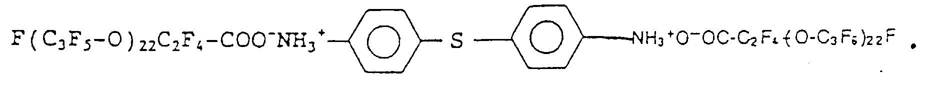

5. Magnetic reproducing recorder according to any of claims 1 to 4, wherein the oiliness agent (B) is selected from the following compounds:
CH₃(CH₂)₆COOH,
CH₃(CH₂)₈COOH,
CH₃(CH₂)₁₀COOH,
CH₃(CH₂)₁₄COOH,
CH₃(CH₂)₁₆COOH,
and

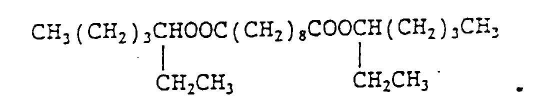

6. Magnetic reproducing recorder according to any of claims 1 to 5, wherein the extreme pressure agent (C) is selected from the following compounds:
(C₆H₅O)₃P,
(CH₃C₆H₄O)₃P,
(n-C₉H₁₉C₆H₄O)₃P,
(C₆H₅O)₂(C₉H₁₉C₆H₄O)P,
(n-C₄H₉0)₃P,
(n-C₁₂H₂₅O)₃P,
(C₆H₅O)₂P(O)H,
(C₆H₅O)₃P(O),
(CH₃C₆H₄O)₃P(O),
(n-C₈H₁₇O)₃P(O),
(C₁₀H₂₁O)₂PHO,
and
(C₁₂H₂₅O)₂PHO.

## Patentansprüche

1. Magnetaufzeichnungs- und -wiedergabegerät, das aufweist:
- einen Magnetkopf (2),
- ein Magnetaufzeichnungsmedium (1), das einen nichtmagnetischen Träger sowie eine Magnetschicht und eine Schutzschicht, die auf dem nichtmagnetischen Träger in dieser Abfolge ausgebildet sind, aufweist,
sowie
- eine Einrichtung zur kontinuierlichen Zufuhr einer niedrigviskosen Schmierflüssigkeit zur Oberfläche der Schutzschicht unter Ausbildung eines Schmierfilms (3) darauf,
dadurch gekennzeichnet, daß
die Schmierflüssigkeit umfaßt:
- ein Schmiermittel, das ausgewählt ist unter
(A) Fluorverbindungen, die einen fluorhaltigen Teil und einen fluorfreien Teil aufweisen, wobei der fluorhaltige Teil eine Perfluorpolyoxyalkyl-Gruppe oder eine Perfluorpolyoxyalkylen-Gruppe aufweist,
oder
(B) Schmierfähigkeitsverbesserern,
die ausgewählt sind unter Fettsäuren der Formel
CₙH₂ₙ₊₁COOH
und
Diestern zweibasiger Säuren der Formel
(CH₂)ₙ(COOCₘH₂ₘ₊₁)₂,
wobei n und m unabhängige ganze Zahlen von 1 bis 30 bedeuten
oder
(C) Hochdruckzusätzen, die ausgewählt sind unter Phosphorverbindungen der Formeln 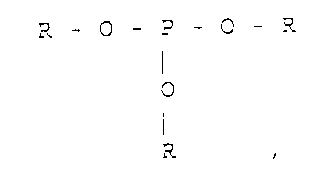 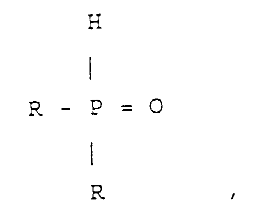 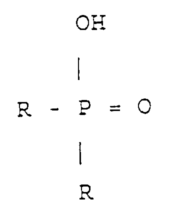 und 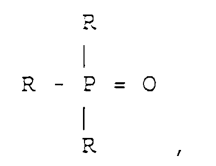 worin R eine Kohlenwasserstoffgruppe bedeutet,
oder
(D) Gemischen (A) + (B)
oder
(E) Gemischen (A) + (C)
sowie
- ein Lösungsmittel vom Perfluorkohlenstoff-Typ mit einer Viskosität von 0,01 bis 10 cSt (10⁻² bis 10 mm²·s⁻¹), das befähigt ist, das Schmiermittel zu lösen.

2. Magnetaufzeichnungs- und -wiedergabegerät nach Anspruch 1, wobei der fluorhaltige Teil der Fluorverbindung (A) eine Gruppe aufweist, die ausgewählt ist unter
F(CF(CF₃)CF₂-O-)x-C₂F₄-,
F(C₃F₆-O-)x-(CF₂O)y-(CF₂)z-
und
-(CF₂O)x-(C₂F₄O)y-(C₃F₆O)₃-CF₂-,
worin x, y und z unabhängige ganze Zahlen von 2 bis 50 bedeuten.

3. Magnetaufzeichnungs- und -wiedergabegerät nach Anspruch 1 oder 2, wobei die Fluorverbindung (A) unter folgenden Verbindungen ausgewählt ist:
Rf-COOH,
Rf-CONH-C₃H₆-Si(OC₂H₅)₃, 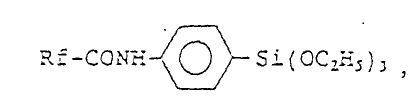 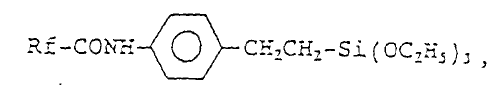
Rf-COOC₂H₄-Si(OCH₃)₃,
(C₂H₅O)₃Si-C₃H₆-HNOC-Rf-CONH-C₃H₆-Si(OC₂H₅)₃,
(C₂H₅O)₃Si-O-CH₂-Rf-CH₂-O-Si(OC₂H₅)₃,
(CH₃O)₃Si-OOC-Rf-COO-Si(OCH₃)₃,
(CH₃O)₃-Si-C₃H₆-NHCO-Rf-CONH-C₃H₆-Si-(OCH₃)₃,
(C₂H₅O)₃-Si-C₃H₆-NHCO-Rf-CONH-C₃H₆-Si-(OC₂H₅)₂,
Rf-COO⁻NH₄⁺, 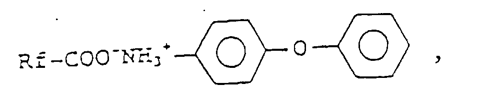 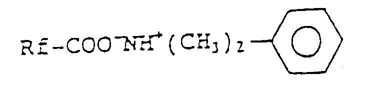
und 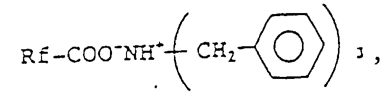 worin Rf eine Perfluorpolyoxyalkyl-Gruppe oder eine Perfluorpolyoxyalkylen-Gruppe bedeutet.

4. Magnetaufzeichnungs- und -wiedergabegerät nach einem der Ansprüche 1 bis 3, wobei die Fluorverbindung (A) unter folgenden Verbindungen ausgewählt ist:
F(CF₂CF₂CF₂-O)₂₂C₂F₄-COO⁻NH₄⁺,
F(CF₂CF₂CF₂-O)₂₂C₂F₄-COOH, 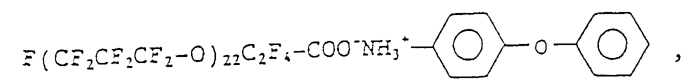 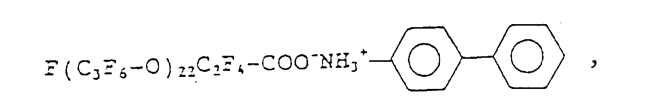 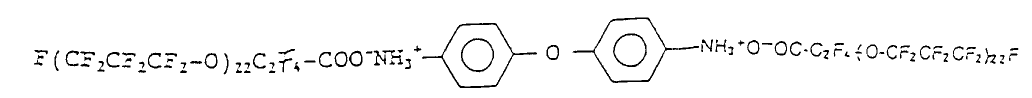
und

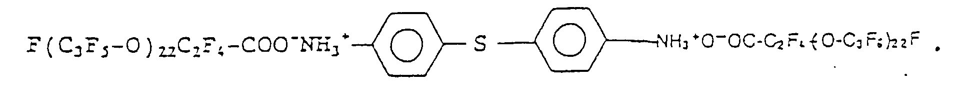

5. Magnetaufzeichnungs- und -wiedergabegerät nach einem der Ansprüche 1 bis 4, wobei der Schmierfähigkeitsverbesserer (B) unter folgenden Verbindungen ausgewählt ist:
CH₃(CH₂)₆COOH,
CH₃(CH₂)₈COOH,
CH₃(CH₂)₁₀COOH,
CH₃(CH₂)₁₄COOH,
CH₃(CH₂)₁₆COOH
und

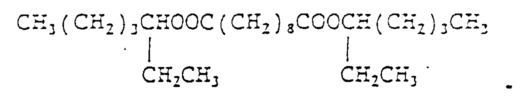

6. Magnetaufzeichnungs- und -wiedergabegerät nach einem der Ansprüche 1 bis 5, wobei der Hochdruck-Zusatz (C) unter folgenden Verbindungen ausgewählt ist:
(C₆H₅O)₃P,
(CH₃C₆H₄O)₃P,
(n-C₉H₁₉C₆H₄O)₃P,
(C₆H₅O)₂(C₉H₁₉C₆H₄O)P,
(n-C₄H₉0)₃P,
(n-C₁₂H₂₅O)₃P,
(C₆H₅O)₂P(O)H,
(C₆H₅O)₃P(O),
(CH₃C₆H₄O)₃P(O),
(n-C₈H₁₇O)₃P(O),
(C₁₀H₂₁O)₂PHO,
und
(C₁₂H₂₅O)₂PHO.

## Revendications

1. Appareil d'enregistrement magnétique, comprenant :
- une tête magnétique (2),
- un support d'enregistrement magnétique (1) comprenant un substrat non-magnétique, une couche magnétique et une couche protectrice qui sont formées sur le substrat non-magnétique dans cet ordre,
et
- des moyens permettant d'alimenter en continu un liquide de lubrification de faible viscosité à la surface de la couche protectrice, formant sur celle-ci un film de lubrification (3),
caractérisé par le fait que
le liquide de lubrification comprend
- un lubrifiant choisi parmi
(A) les composés fluorés comprenant une partie contenant du fluor et une partie exempte de fluor
la partie contenant du fluor comprenant un groupe perfluoropolyoxyalkyle ou un groupe perfluoropolyoxyalkylène,
ou
CₙH₂ₙ₊₁COOH
(B) les agents huileux choisis parmi les acides gras de formule
(CH₂)ₙ(COOCₘH₂ₘ₊₁)₂,
et
les diesters de diacides de formule
dans laquelle n et m sont des nombres entiers indépendants de 1 à 30,
ou
(C) les agents d'extrême pression choisis parmi les composés du phosphore des formules 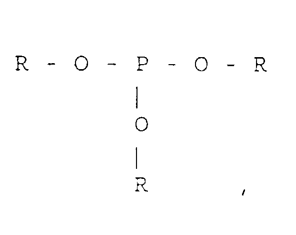 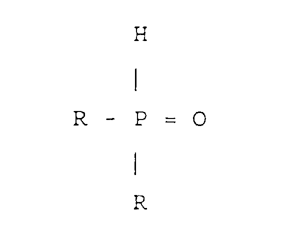 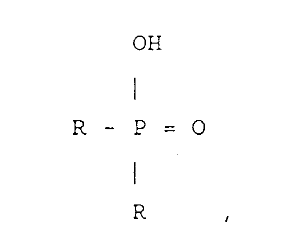 et 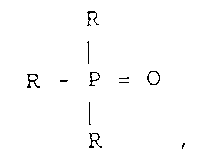 dans lesquelles R est un groupe hydrocarboné,
ou
(D) les mélanges de (A) + (B)
ou
(E) les mélanges de (A) + (C),
et
- un solvant du type perfluorocarboné ayant une viscosité de 0,01 à 10 cSt (10⁻² à 10 mm².^{s-1}) et capable de dissoudre le lubrifiant.

2. Appareil d'enregistrement magnétique selon la revendication 1, dans lequel la partie contenant du fluor du composé fluoré (A) comprend un groupe choisi parmi
F(CF(CF₃)CF₂-O-)x-C₂F₄-,
F(C₃F₆-O-)x-(CF₂O)y-(CF₂)z-,
et
-(CF₂O)x-(C₂F₄O)y-(C₃F₆O)₃-CF₂-
x, y et z étant des nombres entiers indépendants de 2 à 50.

3. Appareil d'enregistrement magnétique selon la revendication 1 ou 2, dans lequel le composé fluoré (A) est choisi parmi les composés suivants :
Rf-COOH,
Rf-CONH-C₃H₆-Si(OC₂H₅)₃, 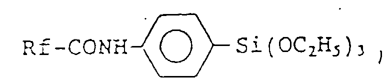 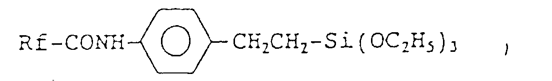
Rf-COOC₂H₄-Si(OCH₃)₃,
(C₂H₅O)₃Si-C₃H₆-HNOC-Rf-CONH-C₃H₆-Si(OC₂H₅)₃,
(C₂H₅O)₃Si-O-CH₂-Rf-CH₂-O-Si(OC₂H₅)₃,
(CH₃O)₃Si-OOC-Rf-COO-Si(OCH₃)₃,
(CH₃O)₃-Si-C₃H₆-NHCO-Rf-CONH-C₃H₆-Si-(OCH₃)₃,
(C₂H₅O)₃-Si-C₃H₆-NHCO-Rf-CONH-C₃H₆-Si-(OC₂H₅)₂,
Rf-COO⁻NH₄⁺, 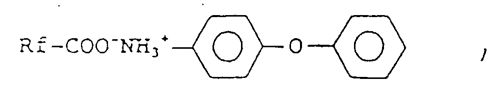 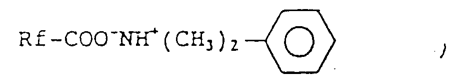
et 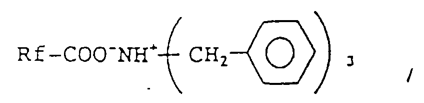 dans lesquels Rf est un groupe perfluoropolyoxyalkyle ou un groupe perfluorooxyalkylène.

4. Appareil d'enregistrement magnétique selon l'une quelconque des revendications 1 à 3, dans lequel le composé fluoré (A) est choisi parmi les composés suivants :
F(CF₂CF₂CF₂-O)₂₂C₂F₄-COO⁻NH₄⁺,
F(CF₂CF₂CF₂-O)₂₂C₂F₄-COOH, 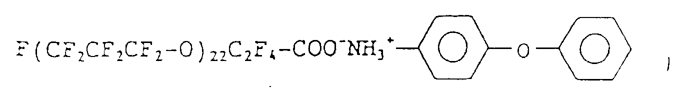 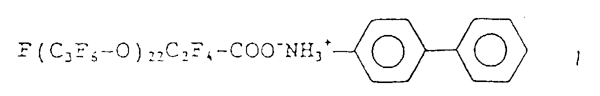 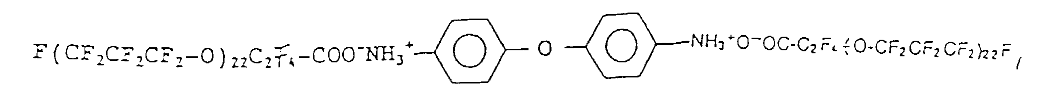
et

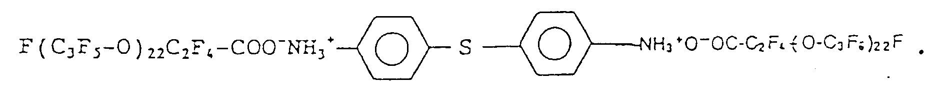

5. Appareil d'enregistrement magnétique selon l'une quelconque des revendications 1 à 4, dans lequel l'agent huileux (B) est choisi parmi les composés suivants :
CH₃(CH₂)₆COOH,
CH₃(CH₂)₈COOH,
CH₃(CH₂)₁₀COOH,
CH₃(CH₂)₁₄COOH,
CH₃(CH₂)₁₆COOH,
et

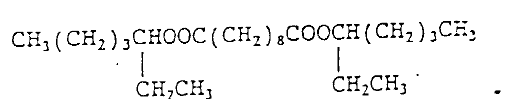

6. Appareil d'enregistrement magnétique selon l'une quelconque des revendications 1 à 5, dans lequel l'agent d'extrême pression (C) est choisi parmi les composés suivants :
(C₆H₅O)₃P,
(CH₃C₆H₄O)₃P,
(n-C₉H₁₉C₆H₄O)₃P,
(C₆H₅O)₂(C₉H₁₉C₆H₄O)P,
(n-C₄H₉0)₃P,
(n-C₁₂H₂₅O)₃P,
(C₆H₅O)₂P(O)H,
et
(C₆H₅O)₃P(O),
(CH₃C₆H₄O)₃P(O),
(n-C₈H₁₇O)₃P(O),
(C₁₀H₂₁O)₂PHO,
(C₁₂H₂₅O)₂PHO.
